# EUROPEAN PATENT APPLICATION

(11) **EP 4 797 211 A1**
(43) Date of publication of application: **26.08.2026**
(21) Application number: 25741512.5
(22) Date of filing: 15.01.2025
(51) Int. Cl.: G06T 11/00

(54) **IMAGE GENERATION METHOD AND APPARATUS, IMAGE GENERATION MODEL TRAINING METHOD AND APPARATUS, AND DEVICE, MEDIUM AND PROGRAM PRODUCT**

(30) Priority: 17.01.2024 CN 202410066677
(71) Applicant: Tencent Technology (Shenzhen) Company Limited, Shenzhen, Guangdong 518057 (CN)
(72) Inventor: YE, Hu, Shenzhen, Guangdong 518057 (CN)
(74) Representative: EP&C
(86) International application number: PCT/CN2025/072426
(87) International publication number: WO 2025/152951

(57) **Abstract**

Disclosed in the embodiments of the present application are an image generation method and apparatus, an image generation model training method and apparatus, and a device, a medium and a program product. The image generation method comprises: acquiring a source image, a noise image and a preset pose image, wherein the noise image is different from the source image; extracting a source pose image from the source image; at least fusing the source image, the noise image, the preset pose image and the source pose image to obtain an image to be processed; inputting the source image into an image feature extractor in an image generation model to extract a comprehensive feature of the source image; and inputting the image to be processed and the comprehensive feature of the source image into an image denoiser in the image generation model to obtain a target image, wherein the target image represents an image of an object in the source image in a preset pose.

## Description

### RELATED APPLICATION

This application claims priority to Chinese Patent Application No. 202410066677.9, entitled "IMAGE GENERATION METHOD AND APPARATUS" and filed with the China National Intellectual Property Administration on January 17, 2024.

### FIELD OF THE TECHNOLOGY

This application relates to the technical field of computers, and in particular, to an image generation method and apparatus, an image generation model training method and apparatus, a device, a medium, and a program product.

### BACKGROUND OF THE DISCLOSURE

In an age of rapid development of Internet technologies, with the development of deep learning, image generation technologies have been widely applied to many fields, such as e-commerce advertising, artistic creation, game design, and virtual reality.

However, in the related art, image generation systems or models adopt adversarial training, resulting in relatively unstable training processes and poor image generation consistency. They may fail to preserve realistic textures, or require dense correspondences, making it difficult to handle complex deformations and severe occlusions. These problems and disadvantages limit the further development of image generation technologies.

### SUMMARY

In view of this, this application provides an image generation method and apparatus, an image generation model training method and apparatus, a device, a medium, and a program product, thereby relieving, alleviating, or even eliminating some or all of the foregoing problems and other possible problems.

According to one aspect, embodiments of this application propose an image generation method, which is executable by an electronic device, and includes:
acquiring an original image comprising an object, a noise image, and a first posture image displaying a preset posture;
extracting a posture of the object from the original image to generate a second posture image;
fusing at least the original image, the noise image, the first posture image, and the second posture image to obtain a first image;
inputting the original image to an image feature extractor in an image generation model to extract an original image feature; and
inputting the first image and the original image feature to an image denoiser in the image generation model to obtain a second image comprising the object under the preset posture.

According to another aspect, the embodiments of this application propose an image generation model training method, which is executable by an electronic device, and includes:
acquiring an original image sample comprising an object, a first posture image sample displaying a preset posture, a noise image sample, a second posture image sample displaying a posture of the object, and a second image sample comprising the object under the preset posture;
fusing at least the original image sample, the noise image sample, the first posture image sample, the second posture image sample, and the second image sample to obtain a first image sample;
fusing the original image sample and the second image sample to obtain a second image label;
inputting the original image sample to an image feature extractor in the image generation model to extract an original image feature of the original image sample;
inputting the first image sample and the original image feature of the original image sample to an image denoiser in the image generation model to obtain a denoised image;
calculating a target loss according to the second image label and the denoised image; and
iteratively updating parameters of the image generation model based on the target loss until the target loss satisfies a preset condition.

According to another aspect, the embodiments of this application propose an image generation apparatus, including:
a first acquisition module, configured to acquire an original image comprising an object, a noise image, and a first posture image displaying a preset posture;
a first extraction module, configured to extract a posture of the object from the original image to generate a second posture image;
a first fusion module, configured to fuse at least the original image, the noise image, the first posture image, and the second posture image to obtain a first image;
a second extraction module, configured to input the original image to an image feature extractor in an image generation model to extract an original image feature; and
an output module, configured to input the first image and the original image feature to an image denoiser in the image generation model to obtain a second image comprising the object under a preset posture.

According to another aspect, the embodiments of this application propose an image generation model training apparatus, including:
a second acquisition module, configured to acquire an original image sample comprising an object, a first posture image sample displaying a preset posture, a noise image sample, a second posture image sample displaying a posture of the object, and a second image sample comprising the object under the preset posture;
a second fusion module, configured to fuse at least the original image sample, the noise image sample, the first posture image sample, the second posture image sample, and the second image sample to obtain a first image sample;
a third fusion module, configured to fuse the original image sample and the second image sample to obtain a second image label;
a third extraction module, configured to input the original image sample to an image feature extractor in the image generation model to extract an original image feature of the original image sample;
a denoising module, configured to input the first image sample and the original image feature of the original image sample to an image denoiser in the image generation model to obtain a denoised image;
a calculation module, configured to calculate a target loss according to the second image label and the denoised image; and
an iteration module, configured to iteratively update parameters of the image generation model based on the target loss until the target loss satisfies a preset condition.

According to another aspect, the embodiments of this application propose an electronic device, including a memory and a processor. The memory has a computer program stored therein, and the computer program, when executed by the processor, causes the processor to perform the image generation method and the image generation model training method according to some embodiments of this application.

According to another aspect, the embodiments of this application propose a computer-readable storage medium, having computer-readable instructions stored therein, and the computer-readable instructions, when executed, implementing the image generation method and the image generation model training method according to some embodiments of this application.

According to another aspect, the embodiments of this application propose a computer program product, including a computer program which, when executed by a processor, implements the image generation method and the image generation model training method according to some embodiments of this application.

### BRIEF DESCRIPTION OF THE DRAWINGS

Various different aspects, features, and advantages of this application will be easily understood according to the following detailed description and the accompanying drawings. In the drawings:
FIG. 1 schematically shows an exemplary implementation environment of an image generation method according to some embodiments of this application.
FIG. 2 is a schematic flowchart of an image generation method according to some embodiments of this application.
FIG. 3A to FIG. 3C schematically show examples of an original image, a first posture image, and a second image according to some embodiments of this application, respectively.
FIG. 4 is a schematic diagram of a principle of an image generation method according to some embodiments of this application.
FIG. 5 is a schematic flowchart of an image generation method according to some embodiments of this application.
FIG. 6 is a schematic flowchart of an image generation method according to some embodiments of this application.
FIG. 7 is a schematic diagram of a principle of an image generation method according to some embodiments of this application.
FIG. 8 is a schematic flowchart of an image generation model training method according to some embodiments of this application.
FIG. 9A is a schematic block diagram of an image generation apparatus according to some embodiments of this application.
FIG. 9B is a schematic block diagram of an image generation model training apparatus according to some embodiments of this application.
FIG. 10 is a schematic block diagram of an electronic device according to some embodiments of this application.

The foregoing accompanying drawings are merely exemplary and illustrative, and are not necessarily drawn according to scale.

### DESCRIPTION OF EMBODIMENTS

Several embodiments of this application are described in more detail below with reference to the accompanying drawings, to enable a person skilled in the art to implement this application. This application may be embodied in many different forms and objectives, and shall not be limited to the embodiments described herein. These embodiments are provided to make this application comprehensive and complete, and fully convey this application to a person skilled in the art. The embodiments do not limit this application.

Although the terms such as "first", "second", and "third" may be used in the embodiments of this application to describe various elements, components, or parts, the elements, components, or parts are not to be limited by these terms. These terms are merely configured for distinguishing one element, component, or part from another element, component, or part. Therefore, a first element, component, or part discussed below may be referred to as a second element, component, or part without departing from the teaching of this application.

Terms used in the embodiments of this application are merely intended to describe particular embodiments but are not intended to limit this application. As used in the embodiments of this application, singular forms "a", "an", and "this" are intended to include plural forms, unless the context clearly indicates otherwise. Further, the terms "include" and/or "contain" when used in this specification specify the existence of the stated features, integers, steps, operations, elements, and/or components, but do not exclude the existence or addition of one or more other features, integers, steps, operations, elements, components, and/or groups thereof. The term "and/or", as used in the embodiments of this application, includes any or all combinations of one or more of associated listed items.

Unless otherwise defined, all terms (including technical and scientific terms) used in the embodiments of this application have same meanings as commonly understood by a person skilled in the art belonging to this application. Further, terms such as those defined in a generally used dictionary shall be interpreted as having meanings consistent with meanings of the terms in the related field and/or in the context of this specification, and will not be interpreted in an idealized or excessively formal sense unless clearly defined as such in the embodiments of this application.

The block diagrams shown in the accompanying drawings are merely functional entities and do not necessarily correspond to physically independent entities. That is, these functional entities may be implemented in a software form, or in one or more hardware modules or integrated circuits (ICs), or in different networks and/or processor apparatuses and/or microcontroller apparatuses.

The flowcharts shown in the accompanying drawings are merely exemplary descriptions, and do not necessarily include all promotional information and operations/steps, nor do they have to be performed in the described order. For example, some operations/steps may further be decomposed, but some operations/steps may be combined or partially combined. Therefore, an actual execution order may change according to an actual situation.

A person skilled in the art may understand that the accompanying drawings are merely exemplary interfaces of exemplary embodiments, and modules or procedures in the accompanying drawings are not necessarily essential for implementing this application.

Artificial intelligence (AI) involves a theory, a method, a technology, and an application system that use a digital computer or a machine controlled by the digital computer to simulate, extend, and expand human intelligence, perceive an environment, acquire knowledge, and use knowledge to obtain an optimal result.

Machine learning (ML) specializes in studying how a computer simulates or implements a human learning behavior to acquire new knowledge or skills, and reorganize an existing knowledge structure, so as to keep improving its performance.

The computer vision (CV) technology refers to using a camera and a computer to replace human eyes to perform machine vision tasks such as recognition and measurement on a target and further perform graphic processing so that the computer processes the target into an image more suitable for human eyes to observe, or an image transmitted to an instrument for detection.

Before the embodiments of this application are described in detail, for the sake of clarity, concepts used in all embodiments of this application are first explained.
1. A diffusion model is a probability generation model configured for modeling and generating data, which may be configured for image generation and transformation tasks. The diffusion model generates samples based on a random process by iteratively propagating noise gradually to a data space. Motivated by non-equilibrium thermodynamics, the diffusion model defines a Markov chain that slowly adds noise to an input sample (forward process) and reconstructs a desired sample from the noise (reverse process). Through a series of forward-reverse diffusion operations, the diffusion model may learn proper transition trajectories, rather than simulating complex feature transfers in a single process.
2. Posture-guided image generation aims to present an image of a human body or an object in a desired posture and appearance. Specifically, the appearance is defined by a given original image, and the posture is defined by a group of key points. In the embodiments of this application, the posture generally refers to a posture of the human body or the object, including a position, a pose, an angle, and the like of the human body or the object.
3. Cross-attention is an attention mechanism configured for establishing an association between two different input sequences. It may compare each element in one sequence with all elements in another sequence to calculate the correlation between the two sequences. It may be configured for processing multimodal tasks, such as image description generation tasks.
4. Self-attention is an attention mechanism that can establish an association between different positions in an input sequence. It determines the importance of each element by calculating similarities between each element and other elements in the sequence. The self-attention may effectively capture a long-distance dependency relationship in the sequence and is not limited by the length of the sequence.
5. A feedforward neural network (FNN) is an artificial neural network model, and includes a plurality of neural network layers. Each neural network layer contains a plurality of neurons. Each neuron receives the output of a previous layer, performs weighted summation on the output, performs non-linear transformation through an activation function, and then transfers the result to a next layer. FNN layers may generally include a fully-connected layer, a convolutional layer, a pooling layer, a normalization layer, a recurrent layer, and the like.
6. Generalization capability refers to the adaptability of an ML algorithm to new samples. In short, it refers to adding a new data set to an original data set and outputting a proper result through training. The purpose of learning is to learn rules hidden behind data, and a trained network can also provide a suitable output for data outside a learning set having the same rule. This capability is referred to as generalization capability.

In the related art, adversarial training is adopted, for example, based on generative adversarial networks (GANs), resulting in relatively unstable training processes. If it is based on the diffusion model, consistency between an original image and a finally generated image cannot be ensured, the generalization capability is relatively weak, and the accuracy of image generation is relatively low.

The embodiments of this application provide an image generation method. Not only original image features are introduced into an image generation model through cross-attention, but also an original image and a first posture image are introduced into the image generation model through concatenating and masking, so that the image generation model can more easily synthesize consistent images, thereby improving the consistency between the original image and the finally generated image.

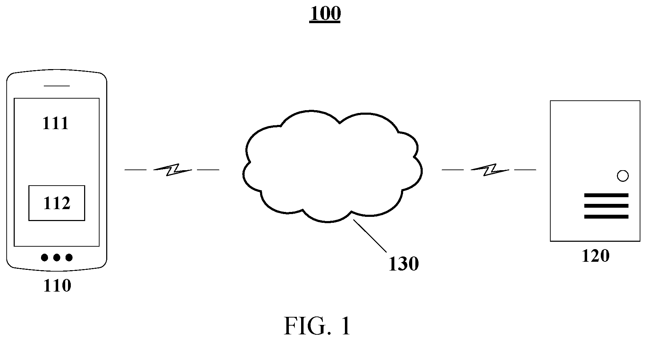

FIG. 1 schematically shows an exemplary implementation environment 100 of an image generation method according to some embodiments of this application. As shown in FIG. 1, the implementation environment 100 may include a terminal device 110, a server 120, and a network 130 configured to connect the terminal device 110 and the server 120. In some embodiments, the terminal device 110 may be configured to implement the image generation method according to this application. For example, the terminal device 110 may be deployed with a corresponding program or instruction configured for performing various methods provided in this application. In some embodiments, the server 120 may further be configured to implement various methods according to this application.

The terminal device 110 and a third-party terminal device 140 may be any type of mobile electronic device, including a mobile computer (for example, a personal digital assistant (PDA), a laptop computer, a notebook computer, a tablet computer, or a netbook), a mobile phone (for example, a cellular phone or a smartphone) shown in FIG. 1, a wearable electronic device (for example, a smart watch or a head-mounted device, including smart glasses), or another type of mobile device. In some embodiments, the terminal device 110 may alternatively be a fixed electronic device, for example, a desktop computer, a game console, or a smart television.

The server 120 may be a single server or a server cluster, or may be a cloud server or a cloud server cluster capable of providing basic cloud computing services such as a cloud service, a cloud database, cloud computing, a cloud function, cloud storage, a network service, cloud communication, a middleware service, a domain name service, a security service, a content delivery network (CDN), and a big data and AI platform. The server mentioned in the embodiments of this application is typically a server computer having a large quantity of memory and processor resources. However, other embodiments are also possible. In some embodiments, the server 120 may alternatively be an ordinary desktop computer, which includes a host, a display, and the like.

Examples of the network 130 include a local area network (LAN), a wide area network (WAN), a personal area network (PAN), and/or a combination of communication networks such as the Internet. The server 120 and the terminal device 110 may include at least one communication interface (not shown) capable of communicating through the network 130. Such a communication interface may be one or more of the following: any type of network interface (for example, a network interface card (NIC)), a wired or wireless (such as an IEEE 802.11 wireless LAN (WLAN)) interface, a worldwide interoperability for microwave access (Wi-MAX) interface, an Ethernet interface, a universal serial bus (USB) interface, a cellular network interface, a BluetoothTM interface, a near field communication (NFC) interface, or the like.

As shown in FIG. 1, the terminal device 110 may include a display screen 111, and a terminal user may interact with a terminal application 112 via the display screen 111. The terminal device 110 may interact with the server 120, for example, via the network 130, such as transmitting data to the server 120 or receiving data from the server 120. The terminal application 112 may be a local application program, a Web application program, or a mini program (LiteApp, such as a mobile phone mini program or a WeChat mini program) used as a lightweight application. When the terminal application is a local application program that needs to be installed, the terminal application 112 may be installed in the terminal device 110. When the terminal application 112 is a Web application program, the terminal application 112 may be accessed through a browser. When the terminal application 112 is a mini program, the terminal application 112 may be directly opened on the terminal device 110 by searching for related information of the terminal application (such as a name of the terminal application), scanning a graphic code of the terminal application (such as a bar code or a two-dimensional code), or the like, without installing the terminal application 112.

The exemplary implementation environment of FIG. 1 is merely illustrative, and the image generation method according to this embodiment of this application is not limited to the shown exemplary implementation environment and server. Although the server 120 and the terminal device 110 are shown and described as separate structures in the embodiments of this application, the server 120 and the terminal device 110 may be different components of the same electronic device. In some embodiments, all operations of the image generation method according to some embodiments of this application may alternatively be implemented on the server 120, or may be jointly implemented on the terminal device 110 and the server 120.

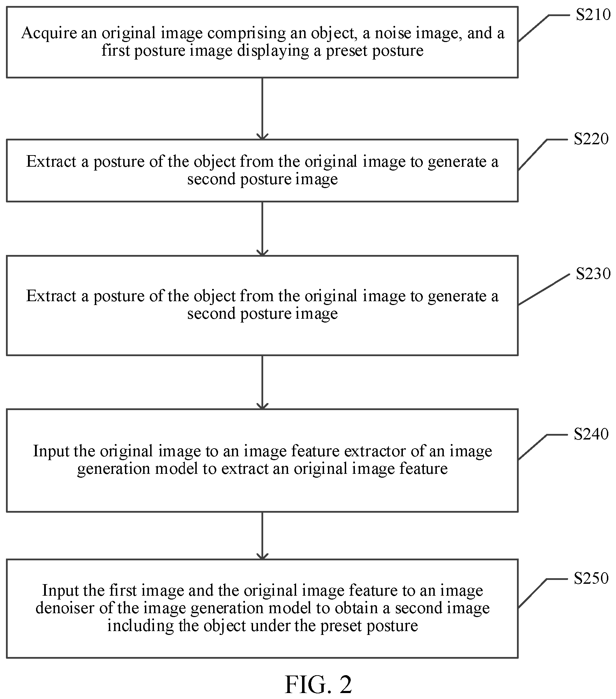

FIG. 2 is a schematic flowchart of an image generation method according to some embodiments of this application. The image generation method is executable by an electronic device. In some embodiments, as shown in FIG. 1, the image generation method according to this embodiment of this application may be performed on the terminal device 110. In other embodiments, the image generation method according to this embodiment of this application may alternatively be performed by the server 120 and the terminal device 110 together.

As shown in FIG. 2, the image generation method according to some embodiments of this application may include operation S210 to operation S250.

S210: Acquire an original image comprising an object, a noise image, and a first posture image displaying a preset posture.

S220: Extract a posture of the object from the original image to generate a second posture image.

S230: Fuse at least the original image, the noise image, the first posture image, and the second posture image to obtain a first image.

S240: Input the original image to an image feature extractor of an image generation model to extract an original image feature.

S250: Input the first image and the original image feature to an image denoiser of the image generation model to obtain a second image including the object under the preset posture.

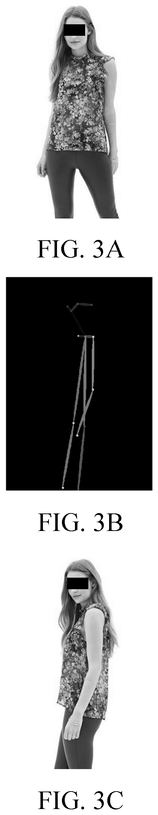

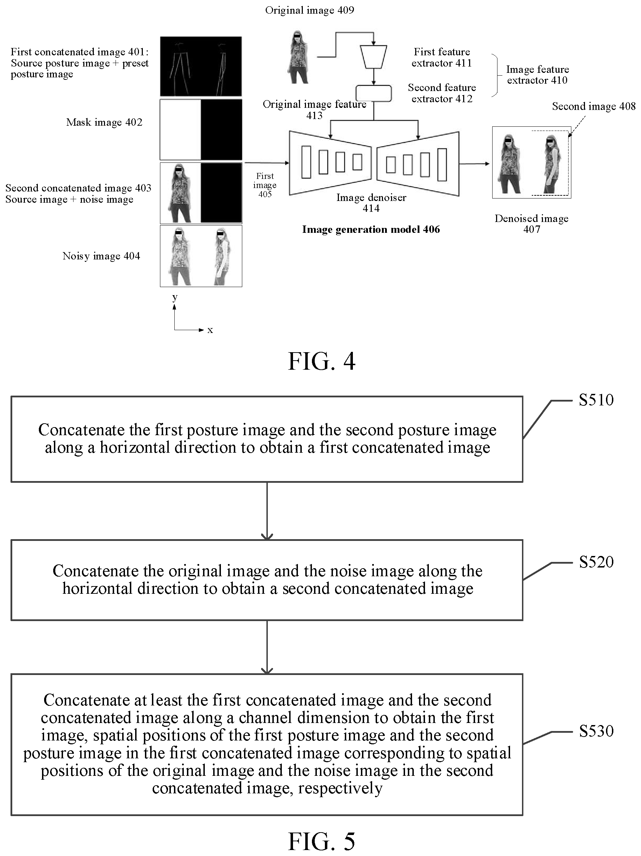

Operation S210 to operation S250 are described in detail below with reference to FIG. 3A to FIG. 3C and FIG. 4. FIG. 3A to FIG. 3C schematically show examples of an original image, a first posture image, and a second image according to some embodiments of this application, respectively, and FIG. 4 is a schematic diagram of a principle of an image generation method according to some embodiments of this application.

At operation S210, the original image, the noise image, and the first posture image may be acquired from an image library. The noise image is different from the original image. In the embodiments of this application, the original image may refer to a to-be-processed original reference image including various image features, and an example of the original image is shown in FIG. 3A. These original images may be acquired from a related platform or system and then stored in the image library.

The noise image may refer to an image different from the original image, and is configured for being concatenated with the original image because a second image is unknown in this case. These noise images may be pre-generated and stored in the image library. Pixel values in a noise image may follow a noise distribution, for example, Gaussian distribution, or Uniform distribution.

The first posture image may refer to an image configured for presenting a preset posture (for example, information such as a predetermined joint position, a skeleton structure, and a pose angle), and an example of the first posture image is shown in FIG. 3B, in which there is no object, but only postures are drawn. In this embodiment of this application, postures are preset, and corresponding posture images are generated according to the postures and stored in the image library. In an example, the generation method includes: providing a blank canvas; obtaining positional data for a plurality of joint points; iterating through the joint points; and rendering a skeletal image thereon. The rendering step includes: drawing lines between hierarchically connected joints according to a predefined kinematic chain (e.g., connecting the wrist to the elbow, and the elbow to the shoulder) to represent bones, and drawing circles or solid dots at the joint coordinates to represent joints. In another example, the generation method includes: accessing a pre-rigged 3D mesh model; applying predefined rotational or translational transformations to specific joints of the model's skeletal structure; and rendering the transformed model using a graphics rendering engine to produce a 2D pose image.

The second image refers to a target image including an object in the original image under a preset posture, or may be understood as a synthetic image of the object in the original image and the first posture image. The object herein may include a recognizable subject (for example, a person or an animal, and in some embodiments, may alternatively include other objects) in the original image.

The image generation method according to this embodiment of this application may be applied to fields such as e-commerce item display and game character design. A particular object exists in the acquired original image, for example, a model. A plurality of original images are acquired based on active authorization performed by the object in the original image after the object knows a related intention of a platform or a system.

In some embodiments, the types of the acquired images may include (but are not limited to) pictures, photos, drawings, color images, comics, and the like. That is, the image described in this application may be an image understood by a person skilled in the art in a general sense, and this application does not limit the type of the image. Similarly, these types of images may include at least one object. For ease of description and clear illustration, a person is used below to represent a corresponding object. However, this does not mean that the object described in this application is limited to persons.

At operation S220, the second posture image is extracted from the original image. In the embodiments of this application, the second posture image may refer to an image having the same posture (for example, information such as a joint position, a skeleton structure, and a pose angle) as the object in the original image. In the embodiments of this application, extracting a second posture image from an image may include the following operations:
detecting human body posture information in the original image using a preset posture estimation algorithm, including recognizing and estimating a joint position, a skeleton structure, and a pose angle;
extracting, from the human body posture information, joint point information of various parts of the human body, including positions and coordinates of joint points in parts such as the head, shoulders, arms, and legs; and
drawing the second posture image using the extracted joint point information.

Specifically, according to the positions and coordinates of the joint points, a skeletal line including the joint points may be drawn to represent the posture, thereby visualizing the posture of the human body as an image.

In some embodiments, the second posture image and the first posture image may both be obtained from a posture image library. That is, these posture images may be preset. Therefore, a posture image library containing a quantity of posture images needs to be constructed, and an appropriate and corresponding posture image is obtained from the posture image library when needed. In this manner, the process of acquiring the second posture image may be simplified, and the processing efficiency may be improved.

At operation S230, at least the original image, the noise image, the first posture image, and the second posture image are fused to obtain the first image. In some embodiments, image fusion refers to a technology of combining a plurality of images into a single image, and may be configured for enhancing the image quality, compensating for defects between different images, improving a visual effect, increasing the amount of image information, and the like.

In some embodiments, image fusion may be implemented simply by concatenating. For example, a plurality of images are concatenated to form a single image.

In some embodiments, image fusion refers to a process of synthesizing a plurality of images according to a particular rule or algorithm to generate a complete image. In some embodiments, image fusion may include the following operations:
aligning, for a plurality of to-be-fused images, the plurality of images under the same coordinate system; and
fusing the aligned images according to a particular direction to generate a complete fused image. A particular direction includes a horizontal direction, a vertical direction, and a channel dimension of an image.

In some embodiments, image fusion may alternatively be implemented through other methods, such as spatial domain fusion and transform domain fusion.

The following continues to describe operation S230 in detail with reference to FIG. 5. FIG. 5 is a schematic flowchart of an image generation method according to some embodiments of this application.

In some embodiments, as shown in FIG. 5, operation S230 may include the following operations.

S510: Concatenate the first posture image and the second posture image along a horizontal direction to obtain a first concatenated image.

S520: Concatenate the original image and the noise image along the horizontal direction to obtain a second concatenated image.

S530: Concatenate at least the first concatenated image and the second concatenated image along a channel dimension to obtain the first image, spatial positions of the first posture image and the second posture image in the first concatenated image corresponding to spatial positions of the original image and the noise image in the second concatenated image, respectively.

In some embodiments, concatenating images along the horizontal direction may be intuitively understood as shown in FIG. 4. On the left side of FIG. 4, there are four images sequentially from top to bottom, which are a first concatenated image 401 (i.e., "second posture image + first posture image" shown in FIG. 4), a mask image 402, a second concatenated image 403 (i.e., "original image + noise image" shown in FIG. 4), and a noisy image 404, respectively. The mask image 402 and the noisy image 404 are further described below.

Concatenating along the horizontal direction means that in a rectangular coordinate system, images have a dimension along an x direction (i.e., a width) and a dimension along a y direction (i.e., a length), and these to-be-concatenated images need to have the same length, so as to be concatenated in the horizontal direction (i.e., the x direction). In this way, the first concatenated image in operation S510 and the second concatenated image in operation S520 may be implemented.

Similarly, in some embodiments, the images may be concatenated along the vertical direction. That is, these to-be-concatenated images need to have the same width, so as to be concatenated in the vertical direction (i.e., the y direction).

In still other embodiments, there may be another concatenating direction, as long as the images can be concatenated along a particular spatial direction.

In image processing, a channel corresponds to a grayscale image obtained when an image is decomposed. One image may be decomposed into a plurality of grayscale images along a plurality of channels. In an example, a color channel corresponds to a grayscale image recording color information, there may be one or more color channels, and each color channel represents luminance value information of a particular color in the image. For example, a three-channel image means that a color image is decomposed into red, green, and blue color channels, each channel contains luminance information of the color in an original image, and the three channels are combined to form a complete color image.

Therefore, in some embodiments, in operation S530, for example, when the first concatenated image and the second concatenated image are each a red, green, and blue (RGB) three-channel image, concatenating along the channel dimension refers to: concatenating an R channel of the first concatenated image and an R channel of the second concatenated image, concatenating a G channel of the first concatenated image and a G channel of the second concatenated image, and concatenating a B channel of the first concatenated image and a B channel of the second concatenated image. In this way, the first image obtained by concatenating along the channel dimension may be intuitively understood as "superimposing" the first concatenated image and the second concatenated image along a z direction (i.e., a direction perpendicular to the plane of the image coordinate). In this manner, the original image and the first posture image may be "bound" together, thereby ensuring generation consistency through internal feature interaction of the image generation model.

It can be seen from FIG. 4 that spatial positions of the second posture image and the first posture image in the first concatenated image 401 correspond to spatial positions of the original image and the noise image in the second concatenated image 403, respectively. That is, the noise image plays functions of occupying and masking, thereby ensuring completeness and effectiveness of concatenating along the channel dimension. An image different from the original image may be selected as the noise image, to generate a final second image based on the noise image.

In some embodiments, operation S530 may include:
acquiring a mask image, the mask image including a first mask part and a second mask part different from the first mask part; and
concatenating the mask image, the first concatenated image, and the second concatenated image along the channel dimension to obtain the first image, spatial positions of the first mask part and the second mask part in the mask image corresponding to the spatial positions of the original image and the noise image in the second concatenated image, respectively.

In the embodiments of this application, the function of the mask image is that a filter may be selectively applied, and a corresponding operation is performed only on a particular region in the image. The mask image needs to have the same size as the first concatenated image and the second concatenated image. Meanwhile, to correspond to spatial positions of the first concatenated image and the second concatenated image, the mask image is divided into a corresponding first mask part and a corresponding second mask part. Then, the mask image, the first concatenated image, and the second concatenated image may be "superimposed" along the z direction (i.e., the direction perpendicular to the plane of the page) to form the first image. The mask image is "sandwiched" between the first concatenated image and the second concatenated image. In this manner, the two partial images (i.e., the original image and the noise image before concatenating) in the second concatenated image 403 may be more accurately distinguished using correspondence of spatial positions, thereby improving the accuracy of the generated image.

In some embodiments, the noise image may include a solid-color image. If the noise image is only slightly different from the original image, although the second image may be generated using the image generation model, the calculation amount is relatively large. Therefore, compared to using the noise image that is merely different from the original image, using a simple solid-color image as the noise image can reduce the calculation amount and improve the calculation efficiency of the image generation model.

In some embodiments, in the mask image, the first mask part is a pure white image, and the second mask part is a pure black image. The solid-color image includes the pure black image. That is, the mask image may be single-channel. For example, as shown in FIG. 4, the mask image 402 of FIG. 4 includes a pure white image (i.e., the first mask part, with corresponding RGB pixel values of [255, 255, 255]) and a pure black image (i.e., the second mask part, with corresponding RGB pixel values of [0, 0, 0]). Meanwhile, the noise image may include a pure black image (with RGB pixel values of [0, 0, 0]). In this way, the second posture image and the original image correspond to the pure white image in the mask image, and the first posture image and the noise image correspond to the pure black image in the mask image, so that the original image and the noise image may be distinguished more easily, thereby further reducing the calculation amount of the image generation model and improving the calculation efficiency.

As shown in FIG. 4, after a first image 405 obtained after concatenating is inputted to an image generation model 406 to obtain a denoised image 407, the denoised image 407 may be further processed to obtain a second image 408 (i.e., the right half of the denoised image 407).

In some embodiments, this process may include: dividing the denoised image along the horizontal direction to obtain an image part corresponding to the spatial position of the noise image in the second concatenated image; and using the image part as the second image.

The spatial position correspondence between the denoised image and the mask image including the pure white image and the pure black image may alternatively be adopted to divide the denoised image along the horizontal direction, and a part corresponding to the pure black image is the second image. It can be seen that the second image includes features of the original image and has the preset posture, thereby realizing a person view under the preset posture.

At operation S240, the original image is inputted to the image feature extractor of the image generation model to extract the original image feature. The original image feature may be a comprehensive feature of the original image.

In this embodiment of this application, texture features may describe detail and structural attributes of a local region in an image. Texture may refer to a spatial relationship between pixels in the image and regularity and irregularity of grayscale distribution, and includes a color, a style, and the like of the image.

As shown in FIG. 4, an original image 409 is inputted to an image feature extractor 410 to extract an original image feature 413.

The image feature extractor of this application is not limited to a general image feature extractor, and further includes a deep learning model. The image feature extractor may include, for example (but is not limited to), a recurrent neural network (RNN), a convolutional neural network (CNN), a scale-invariant feature transform (SIFT), speeded up robust features (SURFs), a histogram of oriented gradients (HOG), or a local binary pattern (LBP). That is, the image feature extractor described in this application may be an image feature extractor understood by a person skilled in the art in a general sense, and this application does not limit the type of the image feature extractor.

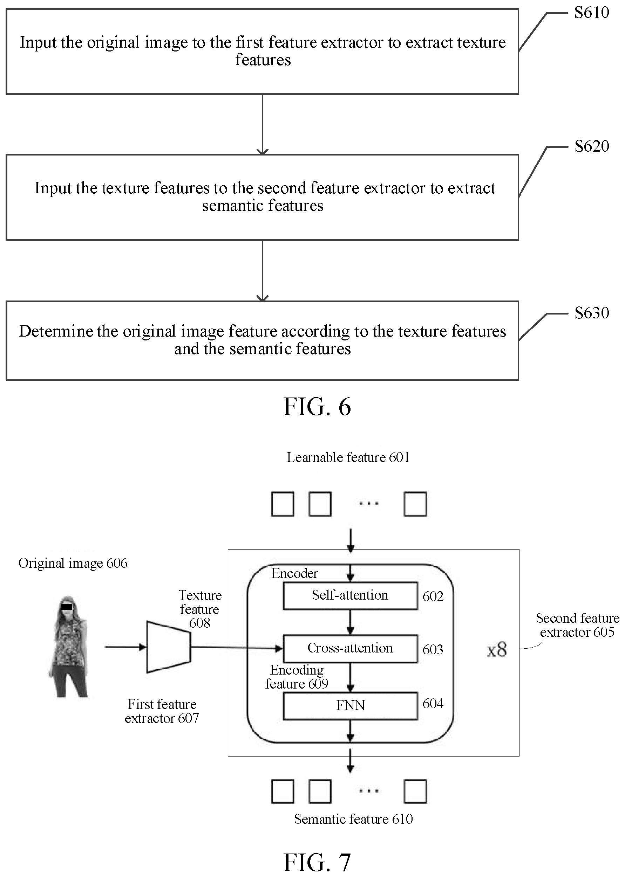

The following continues to describe operation S240 in detail with reference to FIG. 6 and FIG. 7. FIG. 6 is a schematic flowchart of an image generation method according to some embodiments of this application, and FIG. 7 is a schematic diagram of a principle of an image generation method according to some embodiments of this application.

In some embodiments, as shown in FIG. 6, the image feature extractor includes a first feature extractor and a second feature extractor. Operation S240 may include the following operations.

S610: Input the original image to the first feature extractor to extract texture features.

S620: Input the texture features to the second feature extractor to extract semantic features.

S630: Determine the original image feature according to the texture features and the semantic features.

At operation S610, in some embodiments, the first feature extractor may be an image encoder, which may use a contrastive language-image pretraining (CLIP) model. The CLIP model learns a shared representation space by training a large number of images and text associated with the images, so that the images and the text can correspond to each other in the space. The image encoder may extract rich texture features of the images, and has a strong generalization capability.

The first feature extractor may further adopt a deep residual network (ResNet) trained on an Imagenet database, a DINO (emerging properties in self-supervised vision transformers) model trained in an unsupervised manner, and the like. The type of the first image feature extractor is not limited in this embodiment of this application.

As described above, since the original image generally contains a large number of features, in some embodiments, the first feature extractor includes an image compressor and a texture feature extractor. Operation S610 may include: inputting the original image to the image compressor to obtain a compressed original image; and inputting the compressed original image to the texture feature extractor to extract the texture features.

The image compressor is a tool or algorithm configured for reducing the size of a digital image file, and may include a pretrained autoencoder model. In this manner, a calculation amount of the image feature extractor during feature extraction may be reduced without reducing the image quality.

At operation S620, the semantic features may be configured for describing attributes of high-level information such as an object, a scene, and a concept in the image, i.e., the meaning of image content. The semantic feature is more abstract and advanced than the texture feature.

In some embodiments, the second feature extractor may be a model capable of extracting image semantic features. For example, the second feature extractor may include a CNN, a visual transformer model, a feature pyramid network (FPN), a convolutional autoencoder, and the like. The type of the second feature extractor is not limited in this application.

In some embodiments, operation S620 may include: inputting predefined learnable features to the second feature extractor, the second feature extractor including a plurality of layers of encoders, and each layer of the encoder including a self-attention layer, a cross-attention layer, and an FNN layer; inputting the texture features to the second feature extractor to obtain encoding features; and determining the semantic features according to the learnable features and the encoding features.

As shown in FIG. 7, learnable features 601 (for example, 32 learnable features herein) are first defined. These learnable features represent most essential features of the image. Then, these learnable features 601 are inputted to a second feature extractor 605. The second feature extractor 605 includes 8 layers of encoders, and each layer of the encoder includes a self-attention layer 602, a cross-attention layer 603, and an FNN layer 604.

The self-attention layer 602 is configured for capturing a dependency relationship between elements in an input sequence. In this method, the input sequence is divided into several sub-sequences, and self-attention calculation is performed on the sub-sequences to obtain correlation weights between different positions.

The FNN layer 604 is responsible for performing non-linear transformation and mapping on features at each position, and can introduce more nonlinearity, helping the second feature extractor 605 learn more complex feature representations.

After the original image 606 is inputted to the first feature extractor 607 to extract texture features 608, the texture features 608 are inputted to the cross-attention layer 603 as key value sequences to obtain encoding features 609. Then, semantic features 610 are determined according to the learnable features 601 and the encoding features 609. In this manner, the extracted features may contain rich semantic features, thereby improving the accuracy and completeness of the semantic features.

An example of operation S630 is shown in the upper right part of FIG. 4. It can be seen that the image feature extractor may include the first feature extractor and the second feature extractor, and the original image feature may be obtained after the original image is inputted to the image feature extractor. Then, operation S250 may be performed.

At operation S250, the first image and the original image feature are inputted to the image denoiser of the image generation model to obtain the second image. The second image represents the image of the object in the original image under the preset posture. The image denoiser may be configured to denoise an image. In this embodiment of this application, the image denoiser may be based on a diffusion model. In the diffusion model, a denoising process is implemented through iterative deconvolution operations.

In some embodiments, an architecture of the diffusion model is a UNet structure, which is divided into four stages (an encoder, a decoder, a skip connection, and an output layer) in total. Downsampling is performed after each stage. The skip connection is a key part of the UNet. It connects feature maps of different layers in the encoder with feature maps of corresponding layers in the decoder, to implement fusion of low-level and high-level features, thereby helping the decoder better locate and restore detail information.

The second image represents the image of the object in the original image under the preset posture, that is, the posture of the object is transformed to the preset posture. An example of the second image is shown in FIG. 3C.

As shown in FIG. 4, a module of each stage may include a convolution part and an attention part, where attention includes self-attention and cross-attention. The image denoiser 414 includes a convolutional layer, a self-attention layer, and a cross-attention layer.

In some embodiments, operation S250 may include:
inputting the first image and the original image feature to the image denoiser to obtain cross-attention weights of elements in the original image feature;
summing up the elements in the original image feature using the cross-attention weights to obtain associated information; and
obtaining the second image according to the associated information and the first image.

In some embodiments, a cross-attention weight may refer to a correlation weight. The correlation weight of each element in the original image feature is calculated by comparing each element in the original image feature with all elements in the first image through the cross-attention layer in the image denoiser, to obtain a correlation value as the cross-attention between the respective element and the first image. The associated information represents information in the original image feature that is related to the first image.

The cross-attention layer is introduced into the image denoiser, so that the correlation between different input sequences can be effectively captured, thereby extracting more valuable information.

According to this embodiment of this application, a front view of a character from an angle is given, and a side view and a rear view of the character may be generated using the image generation method according to some embodiments of this application, thereby assisting in three-dimensional (3D) modeling of the character. Therefore, according to the image generation method according to some embodiments of this application, a new view of the character in a specific posture can be generated. This technology holds immense application potential and may significantly change working manners of a plurality of industries.

First, a scene of presenting an item in the e-commerce field is considered. For example, if the item is a garment, only a photo of a person wearing the garment needs to be taken, and then a photo of the person wearing the garment in another posture may be synthesized using the method described in the embodiments of this application. For example, a new side view may be synthesized by giving a front view of the person wearing the garment. This innovation can not only significantly save the time of models and photographers and reduce shooting costs, but also provide richer and more diverse visual effects, enhance consumers' shopping experience, and thereby increase product sales.

For another example, considering that when a character is designed in the game field, a front view from an angle is given, and a side view and a rear view of the character may be generated using the method in this embodiment, thereby assisting in 3D modeling of the character.

Therefore, the image generation method according to some embodiments of this application may provide a more efficient and flexible solution to satisfy various specific requirements. For example, if different postures of a character need to be presented in a specific environment or at a specific time, various different views may be generated using only one basic photo, without the need for re-shooting or cumbersome post-processing. This is especially valuable for fields such as movie production, game design, and virtual reality, and may significantly improve the working efficiency while providing a more realistic visual effect.

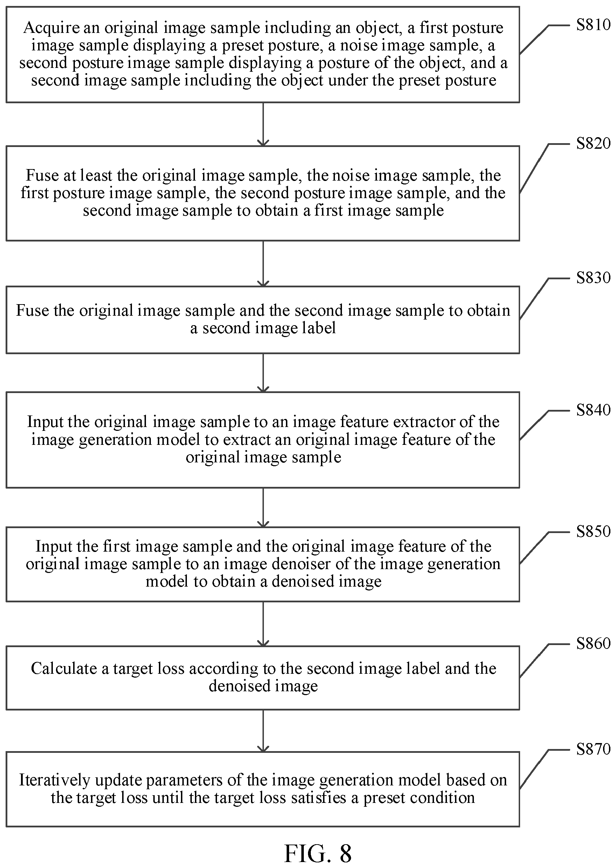

FIG. 8 is a schematic flowchart of an image generation model training method according to some embodiments of this application. The image generation model training method is performed by an electronic device. In some embodiments, as shown in FIG. 1, the image generation model training method may be performed on the terminal device 110. In other embodiments, the image generation model training method may alternatively be performed by the server 120 and the terminal device 110 together. As shown in FIG. 8, the image generation model training method according to some embodiments of this application may include operation S810 to operation S870.

S810: Acquire an original image sample including an object, a first posture image sample displaying a preset posture, a noise image sample, a second posture image sample displaying a posture of the object, and a second image sample including the object under the preset posture.

S820: Fuse at least the original image sample, the noise image sample, the first posture image sample, the second posture image sample, and the second image sample to obtain a first image sample.

S830: Fuse the original image sample and the second image sample to obtain a second image label.

S840: Input the original image sample to an image feature extractor of the image generation model to extract an original image feature of the original image sample.

S850: Input the first image sample and the original image feature of the original image sample to an image denoiser of the image generation model to obtain a denoised image.

S860: Calculate a target loss according to the second image label and the denoised image.

S870: Iteratively update parameters of the image generation model based on the target loss until the target loss satisfies a preset condition.

Referring to the foregoing descriptions of operation S210 to operation S250, in operation S810, the samples used in the training method may be acquired from an image library. The second image sample is an image sample of an object in the original image sample under a preset posture (for example, an example of the original image sample is FIG. 3A, and an example of the second image sample is FIG. 3C). The second image label refers to a training label constructed in a training process, and is configured for guiding the learning of the image generation model.

In some embodiments, operation S820 may include the following operations.

S820a: Concatenate the original image sample and the second image sample along a horizontal direction and add noise, to obtain a first concatenated image sample.

S820b: Concatenate the second posture image sample and the first posture image sample along the horizontal direction to obtain a second concatenated image sample.

S820c: Concatenate the original image sample and the noise image sample along the horizontal direction to obtain a third concatenated image sample.

S820d: Concatenate at least the first concatenated image sample, the second concatenated image sample, and the third concatenated image sample along a channel dimension to obtain the first image sample.

The first concatenated image sample is the noisy image shown in FIG. 4. Noise addition refers to a process of iteratively adding noise to an image sample in the training process.

In some embodiments, operation S820d may include:
acquiring a mask image sample, the mask image sample including a first mask part and a second mask part different from the first mask part; and
concatenating the mask image sample, the first concatenated image sample, the second concatenated image sample, and the third concatenated image sample along the channel dimension to obtain the first image sample, spatial positions of the first mask part and the second mask part in the mask image sample corresponding to spatial positions of the original image sample and the noise image sample in the third concatenated image sample, respectively.

The acquisition and concatenating processes herein may refer to the description of operation S530. The difference is that a concatenated image sample on which noise addition has been performed is additionally concatenated.

In some embodiments, operation S830 may include: concatenating the original image sample and the second image sample along the horizontal direction to obtain the second image label. An operation process thereof is as described above.

At operation S860, the target loss refers to an overall loss in a training process using the image generation model. The target loss may be a mean square error loss (which facilitates the use of a gradient descent algorithm, thereby simplifying the calculation amount). For example, the second image label and a pixel value of each pixel in the denoised image may be separately acquired, and then a mean square error between the second image label and the denoised image may be calculated according to the acquired pixel value of each pixel. In another example, the target loss may alternatively include a loss of another type.

During actual model training, weights may be balanced according to different targets and different application scenes. Therefore, the target loss may be determined in the following way: assigning a corresponding weight to each loss, and using a weighted sum of all losses as the target loss, where the weight represents the importance of a corresponding loss.

At operation S870, in some embodiments, at an early stage of optimization, a relatively large weight and iteration step size may be adopted, so that parameters may quickly converge to the vicinity of the optimal solution. Subsequently, the weight is gradually reduced, and the iteration step size is decreased, so that the parameters may be continuously updated in the iteration process, thereby slowly and accurately converging to the optimal solution. Training may be stopped when the maximum number of iterations is reached, or when the target loss no longer decreases after several optimizations, thereby completing the training of the image generation model.

Here, the model iteration may be performed using some common functions (for example, a sigmoid function) or any other manner, as long as the loss value of the loss function gradually decreases. In an example, a training period ends when all training images in a training data set are sampled. After several preset training periods are completed, the training process ends. An exhaustive list is not provided in this application. The process may be regarded as a supervised training process.

In some embodiments, an image generation effect may be enhanced using classifier-free guidance. The classifier-free guidance refers to guiding the learning of the image generation model in other manners without using a classifier as a guidance or supervisory signal, thereby enabling learning in the absence of explicit label information. The process may be regarded as an unsupervised training process. In some embodiments, in the training process, in a current training round, the original image is inputted to the image feature extractor in the image generation model to extract the original image feature. The original image feature is set to 0 according to a preset probability. For example, when the preset probability is 10%, setting the original image feature to 0 is equivalent to performing dropout. In this case, the all-zero original image feature is essentially a pure black image. Further, the pure black image and the first image are inputted to the image denoiser in the image generation model, and a new image is outputted as a second image, which is used as a new original image for a next round of training. In this way, overfitting of the image generation model may be relieved or prevented, thereby enhancing the generalization capability of the image generation model.

In some embodiments, in the training process, updated parameters include a weight of the first feature extractor (i.e., the image encoder), a weight of the second feature extractor, and a weight of the image denoiser (i.e., the diffusion model). In some examples, a weight of the pretrained first feature extractor (i.e., the image encoder) may be frozen, and only weights of the diffusion model and the second feature extractor are trained. Alternatively, in some embodiments, in the training process, the weights of the first feature extractor, the diffusion model, and the second feature extractor may be trained simultaneously. In an example, in the training process, an Adam weight decay optimizer may be adopted, and a learning rate is fixed to 1e-4.

In this way, according to the image generation method according to some embodiments of this application, the first image is obtained through concatenating based on at least the acquired original image, noise image, first posture image, and second posture image extracted from the original image. The original image and the first posture image may be directly concatenated and inputted to the image generation model, so that the image generation model can more easily synthesize consistent images, thereby improving the consistency and restoration degree between the original image and the finally generated image, enhancing the robustness and the generalization capability of the image generation model, improving the authenticity, clarity, and naturalness of the generated image, and improving the accuracy and recognizability of image generation.

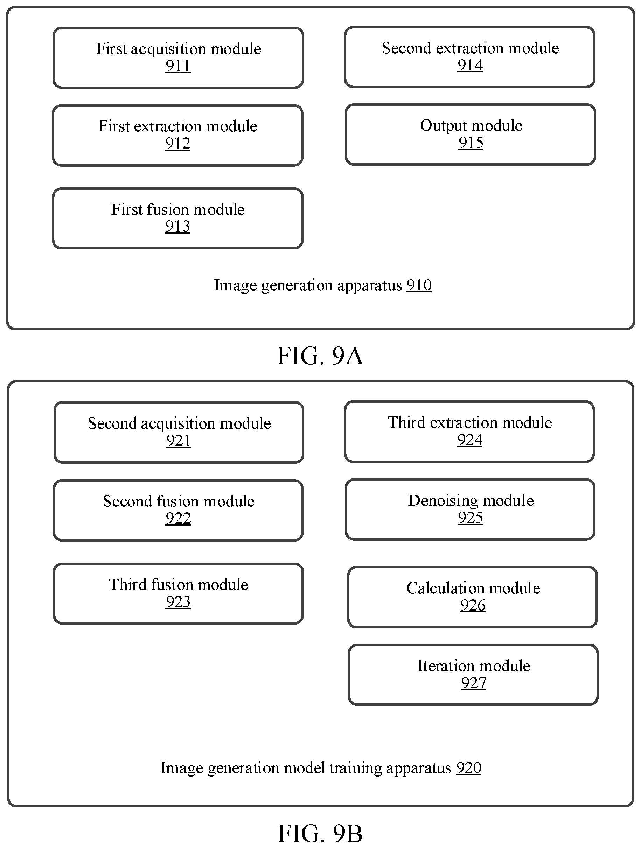

FIG. 9A is a schematic block diagram of an image generation apparatus 910 according to some embodiments of this application. The image generation apparatus 910 shown in FIG. 9A, as an electronic device, may correspond to the terminal device 110 shown in FIG. 1.

As shown in FIG. 9A, the image generation apparatus 910 may include:
a first acquisition module 911, configured to acquire an original image comprising an object, a noise image, and a first posture image displaying a preset posture;
a first extraction module 912, configured to extract a posture of the object from the original image to generate a second posture image;
a first fusion module 913, configured to fuse at least the original image, the noise image, the first posture image, and the second posture image to obtain a first image;
a second extraction module 914, configured to input the original image to an image feature extractor in an image generation model to extract an original image feature; and
an output module 915, configured to input the first image and the original image feature to an image denoiser in the image generation model to obtain a second image including the object under a preset posture.

In some examples, the first fusion module 913 is configured to concatenate the first second posture image and the second posture image along a horizontal direction to obtain a first concatenated image; concatenate the original image and the noise image along the horizontal direction to obtain a second concatenated image; and concatenate at least the first concatenated image and the second concatenated image along a channel dimension to obtain the first image, spatial positions of the second posture image and the first posture image in the first concatenated image corresponding to spatial positions of the original image and the noise image in the second concatenated image, respectively.

In some examples, the first fusion module 913 is configured to acquire a mask image, the mask image comprising a first mask part and a second mask part different from the first mask part; and concatenate the mask image, the first concatenated image, and the second concatenated image along the channel dimension to obtain the first image, spatial positions of the first mask part and the second mask part in the mask image corresponding to the spatial positions of the original image and the noise image in the second concatenated image, respectively.

In some examples, the image feature extractor includes a first feature extractor and a second feature extractor. The second extraction module 914 is configured to input the original image to the first feature extractor to extract texture features; input the texture features to the second feature extractor to extract semantic features; and determine the original image feature according to the texture features and the semantic features.

In some examples, the second extraction module 914 is configured to input the original image to the image compressor to obtain a compressed original image; and input the compressed original image to the texture feature extractor to extract the texture features.

In some examples, the output module 915 is configured to input the first image and the original image feature to the image denoiser to obtain cross-attention weights of elements in the original image feature; summing up the elements in the original image feature using the cross-attention weights to obtain associated information; and obtain the second image according to the associated information and the first image.

The foregoing modules may be implemented in software, hardware, or a combination of the two. A plurality of different modules may be implemented in the same software or hardware structure, or one module may be implemented by a plurality of different software or hardware structures.

FIG. 9B is a schematic block diagram of an image generation model training apparatus 920 according to some embodiments of this application. The image generation model training apparatus 920 shown in FIG. 9B, as an electronic device, may correspond to the terminal device 110 shown in FIG. 1.

As shown in FIG. 9B, the image generation model training apparatus 920 may include:
a second acquisition module 921, configured to acquire an original image sample comprising an object, a first posture image sample displaying a preset posture, a noise image sample, a second posture image sample displaying a posture of the object, and a second image sample comprising the object under the preset posture;
a second fusion module 922, configured to fuse at least the original image sample, the noise image sample, the first posture image sample, the second posture image sample, and the second image sample to obtain a first image sample;
a third fusion module 923, configured to fuse the original image sample and the second image sample to obtain a second image label;
a third extraction module 924, configured to input the original image sample to an image feature extractor in the image generation model to extract an original image feature of the original image sample;
a denoising module 925, configured to input the first image sample and the original image feature of the original image sample to an image denoiser in the image generation model to obtain a denoised image;
a calculation module 926, configured to calculate a target loss according to the second image label and the denoised image; and
an iteration module 927, configured to iteratively update parameters of the image generation model based on the target loss until the target loss satisfies a preset condition.

In some examples, the second fusion module 922 is configured to concatenate the original image sample and the second image sample along a horizontal direction and add noise, to obtain a first concatenated image sample; concatenate the second posture image sample and the first posture image sample along the horizontal direction to obtain a second concatenated image sample; concatenate the original image sample and the noise image sample along the horizontal direction to obtain a third concatenated image sample; and concatenate at least the first concatenated image sample, the second concatenated image sample, and the third concatenated image sample along a channel dimension to obtain the first image sample.

The third fusion module 923 is configured to concatenate the original image sample and the second image sample along the horizontal direction to obtain the second image label.

In some examples, the second fusion module 922 is configured to acquire a mask image sample, the mask image sample including a first mask part and a second mask part different from the first mask part; and concatenate the mask image sample, the first concatenated image sample, the second concatenated image sample, and the third concatenated image sample along the channel dimension to obtain the first image sample, spatial positions of the first mask part and the second mask part in the mask image sample corresponding to spatial positions of the original image sample and the noise image sample in the third concatenated image sample, respectively.

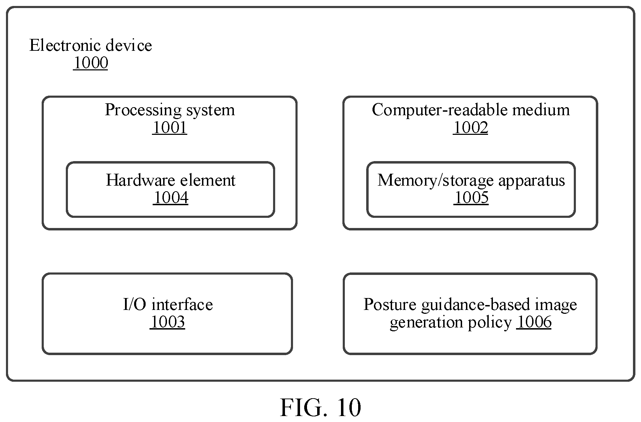

FIG. 10 is a schematic block diagram of an electronic device 1000 according to some embodiments of this application. The electronic device 1000 may represent a device that is configured to implement various apparatuses or modules described in various embodiments of this application and/or perform various methods described in various embodiments of this application. The electronic device 1000 may be, for example, a server, a desktop computer, a laptop computer, a tablet computer, a smartphone, a smart watch, a wearable device, or any other suitable electronic device or computing system. It may include devices of various levels from a full-resource device having a large quantity of storage and processing resources to a low-resource device having limited storage and/or processing resources. In some embodiments, the image generation apparatus 910 described above with reference to FIG. 9 may be separately implemented in one or more electronic devices 1000.

As shown in FIG. 10, an exemplary electronic device 1000 includes a processing system 1001, one or more computer-readable media 1002, and one or more input/output (I/O) interfaces 1003 communicatively coupled to each other. Although not shown, the electronic device 1000 may further include a system bus or another data and command transmission system that couples various assemblies to each other. The system bus may include any one or combination of different bus structures. The bus structures may include a memory bus or a memory controller, a peripheral bus, a universal serial bus, and/or a processor or a local bus using any one of various bus architectures. Alternatively, it may further include a control line, a data line, or the like.

The processing system 1001 represents a function of performing one or more operations using hardware. Therefore, the processing system 1001 is illustrated as including a hardware element 1004 that may be configured as a processor, a functional block, or the like. This may include implementation in hardware as an application specific integrated circuit (ASIC) or another logic device formed by one or more semiconductors. The hardware element 1004 is not limited by a material from which the hardware element is formed or a processing mechanism adopted therein. For example, a processor may include (a plurality of) semiconductors and/or transistors (for example, electronic ICs). In such a context, a processor-executable instruction may be an electronically executable instruction.

The computer-readable medium 1002 is illustrated as including a memory/storage apparatus 1005. The memory/storage apparatus 1005 represents a memory/storage apparatus associated with one or more computer-readable media. The memory/storage apparatus 1005 may include a volatile medium (such as a random access memory (RAM)) and/or a non-volatile medium (such as a read-only memory (ROM), a flash memory, an optical disc, or a magnetic disk). The memory/storage apparatus 1005 may include a fixed medium (such as a RAM, a ROM, or a fixed hard disk drive) and a removable medium (such as a flash memory, a removable hard disk drive, or an optical disc). Exemplarily, the memory/storage apparatus 1005 may be configured to store the first audio of the user of the first category, the requested queuing list, and the like mentioned in the foregoing embodiments. The computer-readable medium 1002 may be configured in various other manners further described below.

One or more I/O interfaces 1003 represent functions that allow a user to input a command and information to the electronic device 1000 and allow presenting the information to the user and/or transmitting to other assemblies or devices using various I/O devices. An example of the input device includes a keyboard, a cursor control device (for example, a mouse), a microphone (for example, configured for voice input), a scanner, a touch function (for example, a capacitive sensor or another sensor configured to detect physical touch), a camera (for example, a motion that does not involve touch may be detected as a gesture using a visible or invisible wavelength (such as an infrared frequency)), network card, a receiver, or the like. An example of the output device includes a display device (for example, a display or a projector), a speaker, a printer, a tactile response device, a network card, a transmitter, or the like. Exemplarily, in the embodiments described above, the user of the first category and the user of the second category may perform input using input interfaces on their respective terminal devices, to initiate a request, record audio and/or a video, and the like, and may view various notifications, watch a video, listen to audio, and the like using output interfaces.

The electronic device 1000 further includes a posture guidance-based image generation policy 1006. The posture guidance-based image generation policy 1006 may be stored in the memory/storage apparatus 1005 as a computing program instruction, or may be hardware or firmware. The posture guidance-based image generation policy 1006 may implement, together with the processing system 1001 and the like, all functions of the modules of the image generation apparatus 910 described with reference to FIG. 9.

The embodiments of this application may describe various technologies in the general context of software, hardware, elements, or program modules. Generally, these modules include a routine, a program, an object, an element, an assembly, a data structure, and the like that execute a particular task or implement a particular abstract data type. The terms "module", "function", and the like used in the embodiments of this application generally refer to software, firmware, hardware, or a combination thereof. The features of the technologies described in the embodiments of this application are platform-independent, which means that the technologies may be implemented on various computing platforms having various processors.

The implementation of the described modules and technologies may be stored on a form of computer-readable medium, or transmitted across the form of computer-readable medium. The computer-readable medium may include various media that may be accessed by the electronic device 1000. As an example rather than a limitation, the computer-readable medium may include a "computer-readable storage medium" and a "computer-readable signal medium".

Contrary to simple signal transmission, a carrier wave, or a signal, the "computer-readable storage medium" refers to a medium and/or a device that can store information permanently, and/or a tangible storage apparatus. Therefore, the computer-readable storage medium refers to a non-signal bearing medium. The computer-readable storage medium includes hardware such as volatile and non-volatile media, removable and non-removable media, and/or storage devices implemented using a method or technology suitable for storage of information (such as a computer-readable instruction, a data structure, a program module, a logic element/circuit, or other data). An example of the computer-readable storage medium may include, but is not limited to, a RAM, a ROM, an electrically erasable programmable ROM (EEPROM), a flash memory or another memory technology, a CD-ROM, a digital versatile disk (DVD) or another optical storage apparatus, a hard disk, a cassette tape, a magnetic tape, a magnetic disk storage apparatus or another magnetic storage device, or another storage device, a tangible medium, or a product suitable for storing expected information and accessible by a computer.

The "computer-readable signal medium" refers to a signal bearing medium configured to transmit an instruction to hardware of the electronic device 1000, for example, through a network. A signal medium may typically embody the computer-readable instruction, the data structure, the program module, or other data in a modulated data signal such as a carrier wave, a data signal, or another transmission mechanism. The signal medium further includes any information transmission medium. As an example rather than a limitation, the signal medium includes, for example, a wired network or a direct-connected wired medium, and a wireless medium such as an acoustic medium, a radio frequency (RF) medium, an infrared medium, and another wireless medium.

As described above, the hardware element 1004 and the computer-readable medium 1002 represent instructions, modules, programmable device logic, and/or fixed device logic implemented in the form of hardware, and in some embodiments, may be configured to implement at least some aspects of the technologies described in the embodiments of this application. The hardware element may include an IC or a system on chip, the ASIC, a field programmable gate array (FPGA), a complex programmable logic device (CPLD), and another implementation in silicon or an assembly of another hardware device. In such a context, the hardware element may be used as a processing device for performing a program task defined by the instruction, the module, and/or logic embodied by the hardware element, and a hardware device configured to store an instruction for execution, for example, the computer-readable storage medium previously described.

The foregoing combination may alternatively be configured for implementing various technologies and modules described in the embodiments of this application. Therefore, the software, the hardware, or the program module, and another program module may be implemented as one or more instructions and/or logic on a form of computer-readable storage medium and/or embodied by one or more hardware elements 1004. The electronic device 1000 may be configured to implement specific instructions and/or functions corresponding to software and/or hardware modules. Therefore, for example, through the use of the computer-readable storage medium and/or the hardware element 1004 of the processing system, a module may be implemented at least partially in hardware as a module executable by the electronic device 1000 as software. The instructions and/or functions may be executed/operated by, for example, one or more electronic devices 1000 and/or processing systems 1001, to implement the technologies, modules, and examples described in the embodiments of this application.

The technologies described in the embodiments of this application may be supported by various configurations of the electronic device 1000, and are not limited to specific examples of the technologies described in the embodiments of this application.

Particularly, according to the embodiments of this application, the processes described above with reference to the flowcharts may be implemented as computer programs. For example, the embodiments of this application provide a computer program product. The computer program product includes a computer program carried on a computer-readable medium, and the computer program contains program code for performing at least one operation in the method embodiments of this application.

In some embodiments of this application, one or more computer-readable storage media are provided, having computer-readable instructions stored therein. The computer-readable instructions, when executed, implement the image generation method according to some embodiments of this application. The operations of the image generation method according to some embodiments of this application may be converted into computer-readable instructions through programming, and then stored in the computer-readable storage medium. When such a computer-readable storage medium is read or accessed by an electronic device or a computer, the computer-readable instructions therein are executed by a processor on the electronic device or the computer to implement the method according to some embodiments of this application.

In the description of this specification, the description of the terms "one embodiment", "some embodiments", "example", "specific example", or "some examples" means that specific features, structures, materials, or characteristics described in combination with the embodiment or example are contained in at least one embodiment or example of this application. In this specification, schematic expressions of the foregoing terms are not necessarily directed to the same embodiment or example. Furthermore, the specific features, structures, materials, or characteristics described may be combined in any suitable manner in any one or more embodiments or examples. In addition, different embodiments or examples and features of the different embodiments or examples described in this specification may be combined by a person skilled in the art without contradicting each other.

Any process or method description described in the flowcharts or in other manners herein may be understood as a module, segment, or part representing code including one or more executable instructions configured for implementing operations of a customized logical function or process. In addition, the preferred implementations of this application includes other implementations, in which functions may be performed not according to the shown or discussed sequence (including in a basically simultaneous manner or in a reverse sequence according to related functions), which shall be understood by a person skilled in the art to which the embodiments of this application belong.

Logic and/or operations shown in the flowcharts or described herein in other manners, for example, may be considered as a sequential list of executable instructions configured for implementing logical functions, and may be specifically implemented in any computer-readable medium, to be used by an instruction execution system, apparatus, or device (for example, a computer-based system, a system including a processor, or another system that may obtain an instruction from the instruction execution system, apparatus, or device and execute the instruction), or to be used in combination with such an instruction execution system, apparatus, or device. In this specification, the "computer-readable medium" may be any apparatus that may contain, store, communicate with, propagate, or transmit a program for use by an instruction execution system, apparatus, or device or for use in combination with such an instruction execution system, apparatus, or device.

Various parts of this application may be implemented using hardware, software, firmware, or a combination thereof. In the foregoing implementations, a plurality of operations or methods may be implemented using software or firmware stored in a memory and executed by an appropriate instruction execution system. For example, if the operations or methods are implemented using hardware, they may be implemented using any one or a combination of the following technologies known in the art: a discrete logic circuit having a logic gate circuit configured to implement a logic function on a data signal, an ASIC having an appropriate combined logic gate circuit, a programmable gate array, an FPGA, and the like.

A person skilled in the art to which the method of the embodiments of this application pertains may understand that, all or some of operations of the foregoing method embodiments may be accomplished by a program instructing relevant hardware. The program may be stored in a computer-readable storage medium. During execution of the program, one or a combination of the operations in the method embodiments is performed.

In addition, the functional units in various embodiments of this application may be integrated in one processing module, or each unit may physically exist separately, or two or more units may be integrated in one module. The foregoing integrated modules may be implemented in the form of hardware or in the form of software functional modules. The integrated modules, if implemented in the form of software functional modules and sold or used as stand-alone products, may alternatively be stored in a computer-readable storage medium.

In the embodiments of this application, the term "module" or "unit" refers to a computer program having a predetermined function or a part of the computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit containing a function of the module or unit.

In specific implementations of this embodiment, various data (for example, the original image, the second image, and image features) configured for image generation and model training are involved. When the embodiments described in this application involving such data are applied to specific products or technologies, user permission or consent needs to be obtained, and the collection, use, and processing of relevant data need to comply with relevant laws, regulations, and standards of relevant countries and regions.

## Claims

1. An image generation method, executable by an electronic device, and comprising:
acquiring an original image comprising an object, a noise image, and a first posture image displaying a preset posture;
extracting a posture of the object from the original image to generate a second posture image;
fusing at least the original image, the noise image, the first posture image, and the second posture image to obtain a first image;
inputting the original image to an image feature extractor in an image generation model to extract an original image feature; and
inputting the first image and the original image feature to an image denoiser in the image generation model to obtain a second image comprising the object under the preset posture.

2. The method according to claim 1, wherein the fusing at least the original image, the noise image, the first posture image, and the second posture image to obtain a first image comprises:
concatenating the first posture image and the second posture image along a horizontal direction to obtain a first concatenated image;
concatenating the original image and the noise image along the horizontal direction to obtain a second concatenated image; and
concatenating at least the first concatenated image and the second concatenated image along a channel dimension to obtain the first image, spatial positions of the first posture image and the second posture image in the first concatenated image corresponding to spatial positions of the original image and the noise image in the second concatenated image, respectively.

3. The method according to claim 2, wherein the concatenating at least the first concatenated image and the second concatenated image along a channel dimension to obtain the first image comprises:
acquiring a mask image, the mask image comprising a first mask part and a second mask part different from the first mask part; and
concatenating the mask image, the first concatenated image, and the second concatenated image along the channel dimension to obtain the first image, spatial positions of the first mask part and the second mask part in the mask image corresponding to the spatial positions of the original image and the noise image in the second concatenated image, respectively.

4. The method according to any one of claims 1 to 3, wherein the image feature extractor comprises a first feature extractor and a second feature extractor; and the inputting the original image to an image feature extractor in an image generation model to extract an original image feature comprises:
inputting the original image to the first feature extractor to extract texture features;
inputting the texture features to the second feature extractor to extract semantic features; and
determining the original image feature according to the texture features and the semantic features.

5. The method according to claim 4, wherein the first feature extractor comprises an image compressor and a texture feature extractor; and the inputting the original image to the first feature extractor to extract texture features comprises:
inputting the original image to the image compressor to obtain a compressed original image; and
inputting the compressed original image to the texture feature extractor to extract the texture features.

6. The method according to any one of claims 1 to 5, wherein the inputting the first image and the original image feature to an image denoiser in the image generation model to obtain a second image comprises:
inputting the first image and the original image feature to the image denoiser to obtain cross-attention weights of elements in the original image feature;
summing up the elements in the original image feature using the cross-attention weights to obtain associated information; and
obtaining the second image according to the associated information and the first image.

7. An image generation model training method, executable by an electronic device, and comprising:
acquiring an original image sample comprising an object, a first posture image sample displaying a preset posture, a noise image sample, a second posture image sample displaying a posture of the object, and a second image sample comprising the object under the preset posture;
fusing at least the original image sample, the noise image sample, the first posture image sample, the second posture image sample, and the second image sample to obtain a first image sample;
fusing the original image sample and the second image sample to obtain a second image label;
inputting the original image sample to an image feature extractor in the image generation model to extract an original image feature of the original image sample;
inputting the first image sample and the original image feature of the original image sample to an image denoiser in the image generation model to obtain a denoised image;
calculating a target loss according to the second image label and the denoised image; and
iteratively updating parameters of the image generation model based on the target loss until the target loss satisfies a preset condition.

8. The method according to claim 7, wherein the fusing at least the original image sample, the noise image sample, the first posture image sample, the second posture image sample, and the second image sample to obtain a first image sample comprises:
concatenating the original image sample and the second image sample along a horizontal direction and adding noise, to obtain a first concatenated image sample;
concatenating the second posture image sample and the first posture image sample along the horizontal direction to obtain a second concatenated image sample;
concatenating the original image sample and the noise image sample along the horizontal direction to obtain a third concatenated image sample; and
concatenating at least the first concatenated image sample, the second concatenated image sample, and the third concatenated image sample along a channel dimension to obtain the first image sample; and
the fusing the original image sample and the second image sample to obtain a second image label comprises:
concatenating the original image sample and the second image sample along the horizontal direction to obtain the second image label.

9. The method according to claim 8, wherein the concatenating at least the first concatenated image sample, the second concatenated image sample, and the third concatenated image sample along a channel dimension to obtain the first image sample comprises:
acquiring a mask image sample, the mask image sample comprising a first mask part and a second mask part different from the first mask part; and
concatenating the mask image sample, the first concatenated image sample, the second concatenated image sample, and the third concatenated image sample along the channel dimension to obtain the first image sample, spatial positions of the first mask part and the second mask part in the mask image sample corresponding to spatial positions of the original image sample and the noise image sample in the third concatenated image sample, respectively.

10. An image generation apparatus, comprising:
a first acquisition module, configured to acquire an original image comprising an object, a noise image, and a first posture image displaying a preset posture;
a first extraction module, configured to extract a posture of the object from the original image to generate a second posture image;
a first fusion module, configured to fuse at least the original image, the noise image, the first posture image, and the second posture image to obtain a first image;
a second extraction module, configured to input the original image to an image feature extractor in an image generation model to extract an original image feature; and
an output module, configured to input the first image and the original image feature to an image denoiser in the image generation model to obtain a second image comprising the object under a preset posture.

11. The apparatus according to claim 10, wherein the first fusion module is configured to concatenate the first posture image and the second posture image along a horizontal direction to obtain a first concatenated image; concatenate the original image and the noise image along the horizontal direction to obtain a second concatenated image; and concatenate at least the first concatenated image and the second concatenated image along a channel dimension to obtain the first image, spatial positions of the second posture image and the first posture image in the first concatenated image corresponding to spatial positions of the original image and the noise image in the second concatenated image, respectively.

12. The apparatus according to claim 11, wherein the first fusion module is configured to acquire a mask image, the mask image comprising a first mask part and a second mask part different from the first mask part; and concatenate the mask image, the first concatenated image, and the second concatenated image along the channel dimension to obtain the first image, spatial positions of the first mask part and the second mask part in the mask image corresponding to the spatial positions of the original image and the noise image in the second concatenated image, respectively.

13. The apparatus according to any one of claims 10 to 12, wherein the image feature extractor comprises a first feature extractor and a second feature extractor; and the second extraction module is configured to input the original image to the first feature extractor to extract texture features; input the texture features to the second feature extractor to extract semantic features; and determine the original image feature according to the texture features and the semantic features.

14. The apparatus according to any one of claims 10 to 13, wherein the output module is configured to input the first image and the original image feature to the image denoiser to obtain cross-attention weights of elements in the original image feature; sum up the elements in the original image feature using the cross-attention weights to obtain associated information; and obtain the second image according to the associated information and the first image.

15. An image generation model training apparatus, comprising:
a second acquisition module, configured to acquire an original image sample comprising an object, a first posture image sample displaying a preset posture, a noise image sample, a second posture image sample displaying a posture of the object, and a second image sample comprising the object under the preset posture;
a second fusion module, configured to fuse at least the original image sample, the noise image sample, the first posture image sample, the second posture image sample, and the second image sample to obtain a first image sample;
a third fusion module, configured to fuse the original image sample and the second image sample to obtain a second image label;
a third extraction module, configured to input the original image sample to an image feature extractor in the image generation model to extract an original image feature of the original image sample;
a denoising module, configured to input the first image sample and the original image feature of the original image sample to an image denoiser in the image generation model to obtain a denoised image;
a calculation module, configured to calculate a target loss according to the second image label and the denoised image; and
an iteration module, configured to iteratively update parameters of the image generation model based on the target loss until the target loss satisfies a preset condition.

16. The apparatus according to claim 15, wherein the second fusion module is configured to concatenate the original image sample and the second image sample along a horizontal direction and add noise, to obtain a first concatenated image sample; concatenate the second posture image sample and the first posture image sample along the horizontal direction to obtain a second concatenated image sample; concatenate the original image sample and the noise image sample along the horizontal direction to obtain a third concatenated image sample; and concatenate at least the first concatenated image sample, the second concatenated image sample, and the third concatenated image sample along a channel dimension to obtain the first image sample; and
the third fusion module is configured to concatenate the original image sample and the second image sample along the horizontal direction to obtain the second image label.

17. The apparatus according to claim 16, wherein the second fusion module is configured to acquire a mask image sample, the mask image sample comprising a first mask part and a second mask part different from the first mask part; and concatenate the mask image sample, the first concatenated image sample, the second concatenated image sample, and the third concatenated image sample along the channel dimension to obtain the first image sample, spatial positions of the first mask part and the second mask part in the mask image sample corresponding to spatial positions of the original image sample and the noise image sample in the third concatenated image sample, respectively.

18. An electronic device, comprising:
a memory and a processor,
the memory having a computer program stored therein, and the computer program, when executed by the processor, implementing the method according to any one of claims 1 to 9.

19. A computer-readable storage medium, having computer-readable instructions stored therein, and the computer-readable instructions being loaded by a processor to perform the method according to any one of claims 1 to 9.

20. A computer program product, comprising a computer program, the computer program being stored in a computer-readable storage medium, and a processor of an electronic device, when reading the computer program from the computer-readable storage medium, performing the method according to any one of claims 1 to 9.
